# EUROPEAN PATENT APPLICATION

(11) **EP 4 693 936 A1**
(43) Date of publication of application: **11.02.2026**
(21) Application number: 24784304.8
(22) Date of filing: 02.04.2024
(51) Int. Cl.: H04B 7/06

(54) **CSI REPORT TRANSMISSION METHOD AND APPARATUS, AND TERMINAL, NETWORK-SIDE DEVICE AND MEDIUM**

(30) Priority: 07.04.2023 CN 202310373032
(71) Applicant: Vivo Mobile Communication Co., Ltd., Dongguan, Guangdong 523863 (CN)
(72) Inventor: CHEN, Xiaohang, Dongguan, Guangdong 523863 (CN)
(74) Representative: dompatent
(86) International application number: PCT/CN2024/085637
(87) International publication number: WO 2024/208221

(57) **Abstract**

The present application belongs to the technical field of communications. Disclosed are a CSI report transmission method and apparatus, and a terminal, a network-side device and a medium. The CSI report transmission method in the embodiments of the present application comprises: a terminal receiving a CSI reporting configuration from a network-side device; and the terminal sending a first CSI report to the network-side device in a first time unit on the basis of the CSI reporting configuration, wherein the first CSI report comprises CSI, which is measured in a second time unit, the second time unit is determined on the basis of at least one of a third time unit and a first time-frequency type, the third time unit is determined according to the first time unit and a preset offset value, and the first time-frequency type comprises at least one of the following: a time-frequency type of the third time unit, and a time-frequency type which is indicated by the network-side device.

## Description

### CROSS-REFERENCE TO RELATED APPLICATIONS

This application claims priority to Chinese Patent Application No. 202310373032.5, filed in China on April 7, 2023, which is incorporated herein by reference in its entirety.

### TECHNICAL FIELD

This application pertains to the field of communication technology, and specifically relates to a CSI report transmission method and apparatus, a terminal, a network-side device, and a medium.

### BACKGROUND

At present, a base station, when operating in a hybrid full-duplex and half-duplex mode, switches between the full-duplex mode and the half-duplex mode. During the mode switching, antenna configuration of the base station needs to be changed correspondingly.

However, the change in the antenna configuration causes changes in spatial characteristics. When a terminal performs channel measurement based on a downlink reference signal sent by the base station, the change in spatial characteristics results in a relatively low degree of matching between a measurement result and the downlink reference signal, leading to a relatively poor accuracy in reporting of channel state information (Channel State Information, CSI).

### SUMMARY

Embodiments of this application provide a CSI report transmission method and apparatus, a terminal, a network-side device, and a medium, to resolve a problem of relatively poor accuracy in CSI reporting.

According to a first aspect, a CSI report transmission method is provided, executed by a terminal. The method includes: receiving, by a terminal, a CSI reporting configuration from a network-side device; and sending, by the terminal based on the CSI reporting configuration, a first CSI report to the network-side device in a first time unit; where the first CSI report includes CSI measured in a second time unit, and the second time unit is determined based on at least one of a third time unit and a first time-frequency type; and the third time unit is determined based on the first time unit and a preset offset value, and the first time-frequency type includes either of the following: a time-frequency type of the third time unit, and a time-frequency type indicated by the network-side device.

According to a second aspect, a CSI report transmission method is provided, executed by a network-side device. The method includes: sending, by a network-side device, a CSI reporting configuration to a terminal, where the CSI reporting configuration is used to instruct the terminal to send a first CSI report in a first time unit; and receiving, by the network-side device, the first CSI report in the first time unit; where the first CSI report includes CSI measured by the terminal in a second time unit, and the second time unit is determined by the terminal based on at least one of a third time unit and a first time-frequency type; and the third time unit is determined by the terminal based on the first time unit and a preset offset value, and the first time-frequency type includes either of the following: a time-frequency type of the third time unit, and a time-frequency type indicated by the network-side device.

According to a third aspect, a CSI report transmission apparatus is provided. The apparatus includes a receiving module and a sending module; the receiving module is configured to receive a CSI reporting configuration from a network-side device; and the sending module is configured to send, based on the CSI reporting configuration received by the receiving module, a first CSI report to the network-side device in a first time unit; where the first CSI report includes CSI measured in a second time unit, and the second time unit is determined based on at least one of a third time unit and a first time-frequency type; and the third time unit is determined based on the first time unit and a preset offset value, and the first time-frequency type includes either of the following: a time-frequency type of the third time unit, and a time-frequency type indicated by the network-side device.

According to a fourth aspect, a CSI report transmission apparatus is provided. The apparatus includes a sending module and a receiving module; the sending module is configured to send a CSI reporting configuration to a terminal, where the CSI reporting configuration is used to instruct the terminal to send a first CSI report in a first time unit; and the receiving module is configured to receive the first CSI report in the first time unit; where the first CSI report includes CSI measured by the terminal in a second time unit, and the second time unit is determined by the terminal based on at least one of a third time unit and a first time-frequency type; and the third time unit is determined by the terminal based on the first time unit and a preset offset value, and the first time-frequency type includes either of the following: a time-frequency type of the third time unit, and a time-frequency type indicated by the apparatus.

According to a fifth aspect, a terminal is provided. The terminal includes a processor and a memory, where the memory stores a program or instructions capable of running on the processor, and when the program or instructions are executed by the processor, the steps of the method according to the first aspect are implemented.

According to a sixth aspect, a terminal is provided, including a processor and a communication interface, where the communication interface is configured to receive a CSI reporting configuration from a network-side device; and send, based on the received CSI reporting configuration, a first CSI report to the network-side device in a first time unit; where the first CSI report includes CSI measured in a second time unit, and the second time unit is determined based on at least one of a third time unit and a first time-frequency type; and the third time unit is determined based on the first time unit and a preset offset value, and the first time-frequency type includes either of the following: a time-frequency type of the third time unit, and a time-frequency type indicated by the network-side device.

According to a seventh aspect, a network-side device is provided. The network-side device includes a processor and a memory, the memory stores a program or instructions capable of running on the processor, and when the program or instructions are executed by the processor, the steps of the method according to the second aspect are implemented.

According to an eighth aspect, a network-side device is provided. The network-side device includes a processor and a communication interface, where the communication interface is configured to send a CSI reporting configuration to a terminal, where the CSI reporting configuration is used to instruct the terminal to send a first CSI report in a first time unit; and receive the first CSI report in the first time unit; where the first CSI report includes CSI measured by the terminal in a second time unit, and the second time unit is determined by the terminal based on at least one of a third time unit and a first time-frequency type; and the third time unit is determined by the terminal based on the first time unit and a preset offset value, and the first time-frequency type includes either of the following: a time-frequency type of the third time unit, and a time-frequency type indicated by the network-side device.

According to a ninth aspect, a readable storage medium is provided. The readable storage medium stores a program or instructions, and when the program or instructions are executed by a processor, the steps of the method according to the first aspect are implemented, or the steps of the method according to the second aspect are implemented.

According to a tenth aspect, a wireless communication system is provided, including: a terminal and a network-side device, where the terminal is configured to perform the steps of the method according to the first aspect, and the network-side device is configured to perform the steps of the method according to the second aspect.

According to an eleventh aspect, a chip is provided. The chip includes a processor and a communication interface, the communication interface is coupled to the processor, and the processor is configured to run a program or instructions to implement the method according to the first aspect, or to implement the method according to the second aspect.

According to a twelfth aspect, a computer program/program product is provided, where the computer program/program product is stored in a storage medium, and the program/program product is executed by at least one processor to implement the steps of the CSI report transmission method according to the first aspect, or to implement the steps of the CSI report transmission method according to the second aspect.

In the embodiments of this application, a terminal may receive a CSI reporting configuration from a network-side device; and send, based on the CSI reporting configuration, a first CSI report to the network-side device in a first time unit; where the first CSI report includes CSI measured in a second time unit, and the second time unit is determined based on at least one of a third time unit and a first time-frequency type; and the third time unit is determined based on the first time unit and a preset offset value, and the first time-frequency type includes either of the following: a time-frequency type of the third time unit, and a time-frequency type indicated by the network-side device. Through this solution, since the first CSI report sent by the terminal to the network-side device in the first time unit includes the CSI measured in the second time unit, and the second time unit is determined based on at least one of the third time unit and the first time-frequency type, the degree of matching between the measurement result and the downlink reference signal can be improved, thereby improving the accuracy of CSI reporting.

### BRIEF DESCRIPTION OF DRAWINGS

FIG. 1 is a block diagram of a wireless communication system to which embodiments of this application are applicable;
FIG. 2 is a schematic diagram of a symmetric spectrum in frequency division duplex (Frequency Division Duplexing, FDD);
FIG. 3 is a schematic diagram of an asymmetric spectrum in time division duplex (Time Division Duplexing, TDD);
FIG. 4 is a first schematic diagram of a transmission spectrum of a half-duplex terminal;
FIG. 5 is a second schematic diagram of a transmission spectrum of a half-duplex terminal;
FIG. 6 is a schematic diagram of a slot format;
FIG. 7 is a flowchart of a CSI report transmission method according to an embodiment of this application;
FIG. 8 is a first schematic diagram of a CSI report transmission method according to an embodiment of this application;
FIG. 9 is a second schematic diagram of a CSI report transmission method according to an embodiment of this application;
FIG. 10 is a third schematic diagram of a CSI report transmission method according to an embodiment of this application;
FIG. 11 is a fourth schematic diagram of a CSI report transmission method according to an embodiment of this application;
FIG. 12 is a fifth schematic diagram of a CSI report transmission method according to an embodiment of this application;
FIG. 13 is a flowchart of another CSI report transmission method according to an embodiment of this application;
FIG. 14 is a schematic structural diagram of a CSI report transmission apparatus according to an embodiment of this application;
FIG. 15 is a schematic structural diagram of another CSI report transmission apparatus according to an embodiment of this application;
FIG. 16 is a schematic diagram of a communication device according to an embodiment of this application;
FIG. 17 is a schematic diagram of a hardware structure of a terminal according to an embodiment of this application; and
FIG. 18 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "or" in this application indicates at least one of the connected objects. For example, "A or B" covers three schemes, that is, scheme 1: including A and not including B; scheme 2: including B and not including A; and scheme 3: including both A and B. The character "/" generally indicates that the associated objects before and after it are in an "or" relationship.

The term "indication" in this application can be either a direct indication (or explicit indication) or an indirect indication (or implicit indication). Direct indication can be understood as the sender explicitly informing the receiver of content such as specific information, operations to be performed, or requested results in the sent indication. Indirect indication can be understood as the receiver determining corresponding information based on the indication sent by the sender, or making judgments and determining operations to be performed, requested results, or the like based on the judgment results.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

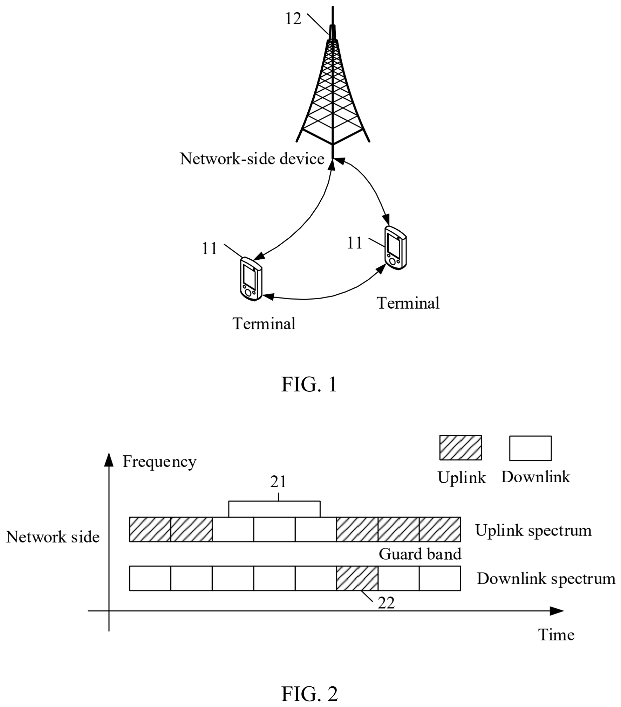

FIG. 1 is a block diagram of a wireless communication system to which the embodiments of this application are applicable. The wireless communication system includes a terminal 11 and a network-side device 12. The terminal 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (augmented reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (home devices with wireless communication functions, such as refrigerators, televisions, washing machines, or furniture), a game console, a personal computer (Personal Computer, PC), a teller machine, or a self-service machine. The wearable device includes a smartwatch, a smart band, smart earphones, smart glasses, smart jewelry (a smart bracelet, a smart hand chain, a smart ring, a smart necklace, a smart foot bangle, a smart anklet, and the like), a smart wristband, smart clothing, or the like. It should be noted that the specific type of the terminal 11 is not limited in the embodiments of this application. The network-side device 12 may include an access network-side device or a core network-side device . The access network-side device may also be referred to as a radio access network (Radio Access Network, RAN) device, a radio access network function, or a radio access network unit. The access network-side device may include a base station, a wireless local area network (Wireless Local Area Network, WLAN) access point (Access Point, AS), a wireless fidelity (Wireless Fidelity, WiFi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

The following details the CSI report transmission method and apparatus, terminal, network-side device, and medium according to the embodiments of this application through some embodiments and application scenarios thereof with reference to the accompanying drawings.

At present, the Rel-18 network-side flexible/full duplex (that is, flexible/full duplex), and user/terminal-side half-duplex operation have the following characteristics.

### 1. FDD symmetric spectrum

As shown in FIG. 2, in the FDD uplink spectrum, a time unit 21 can be semi-statically configured or dynamically indicated for downlink transmission; in the FDD downlink spectrum, a time unit 22 can be semi-statically configured or dynamically indicated for uplink transmission.

### 2. TDD asymmetric spectrum

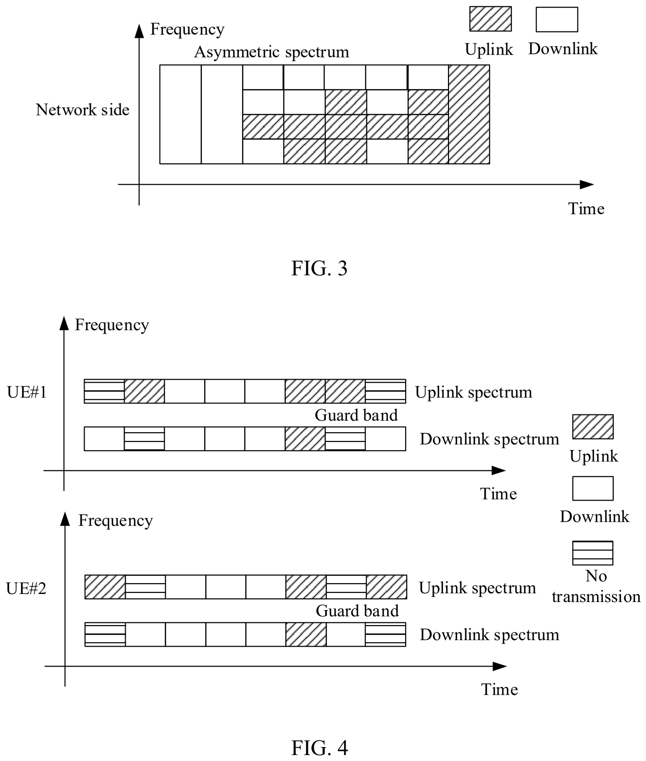

As shown in FIG. 3, different frequency domain resources on some slots/symbols of TDD can be semi-statically configured or dynamically indicated as having both uplink transmission and downlink reception.

### 3. Half-duplex terminal

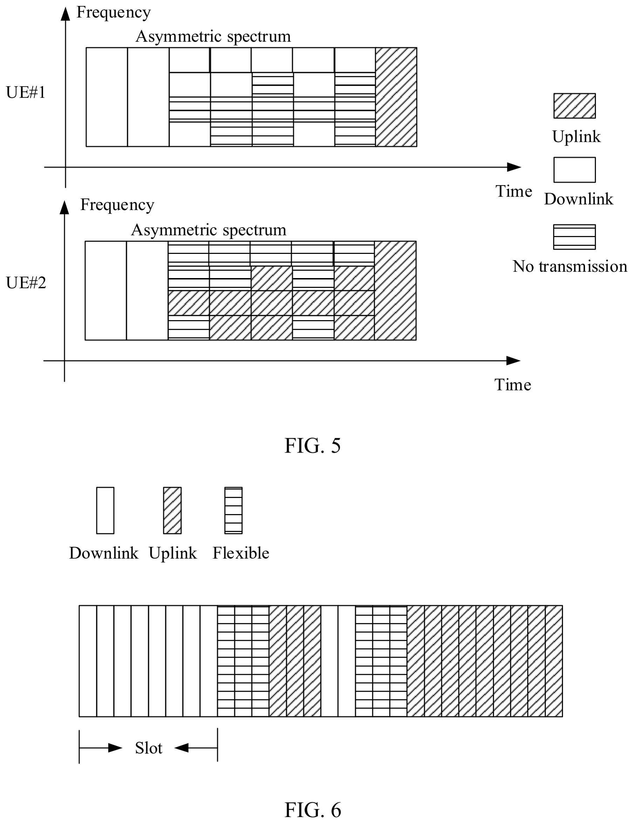

As shown in FIG. 4 and FIG. 5, a half-duplex terminal can only perform uplink transmission or downlink reception at a same time, that is, the terminal cannot receive signals and send signals at the same time.

To implement flexible network deployment, in the NR system, the transmission direction of each symbol in one slot can be configured through the slot format (that is, slot format).

There are three definitions for the transmission direction of slots in NR: downlink (Down Link, DL), uplink (Up Link, UL), and flexible (that is, flexible). When the network configures a slot/symbol as DL or UL, the transmission direction at that time is clear; when the network configures a slot/symbol as flexible, the transmission direction at that time is to be determined. The network can modify the transmission direction of the flexible slot/symbol through dynamic signaling, such as dynamic slot format indicator (dynamic slot format indicator, dynamic SFI). As shown in FIG. 6, a slot can include uplink orthogonal frequency division multiplexing (Orthogonal Frequency Division Multiplexing, OFDM) symbols, downlink OFDM symbols, and flexible OFDM symbols. The flexible OFDM symbols can be rewritten as downlink OFDM symbols or uplink OFDM symbols.

The network can indicate the format of one or more slots through SFI. The SFI can be sent in a group common physical downlink control channel (Group Common Physical Downlink Control Channel, GC-PDCCH). When the UE receives the SFI, it can determine, based on the indication of the SFI, whether to monitor the PDCCH. Specifically, the base station may semi-statically configure one or more cell-specific (that is, cell-specific) slot formats for the terminal through the higher-layer parameter UL-DL-configuration-common and the higher-layer parameter UL-DL-configuration-common-Set2 (optional); and may also semi-statically configure one or more UE-specific (that is, UE-specific) slot formats for the terminal through the higher-layer parameter UL-DL-configuration-dedicated. The base station may rewrite the flexible symbol or slot in the semi-static configuration through the SFI carried in the GC-PDCCH.

The transmission direction implicitly indicated by the UE-specific radio resource control (Radio Resource Control, RRC) configuration is collectively referred to as measurement (measurement), specifically including:
1. Uplink and downlink transmission directions implicitly indicated by UE-specific RRC signaling-configured periodic or semi-persistent CSI reference signal (CSI Reference Signal, CSI-RS) measurement, periodic CSI reporting, and periodic or semi-persistent channel sounding reference signal (Sounding Reference Signal, SRS).
2. Physical random access channel (Physical Random Access Channel, PRACH) resources configured by UE-specific RRC, and type1 and type2 grant-free uplink transmissions.
3. For type2 grant-free uplink transmission, only the transmission on the first activated resource is considered as UE-specific data (that is, UE-specific data).

UE-specific transmission includes: physical downlink shared channel (Physical downlink shared channel, PDSCH), physical uplink shared channel (Physical Uplink Shared Channel, PUSCH), A/N feedback of PDSCH, aperiodic measurement triggered by downlink control information (Downlink Control Information, DCI), and the like.

In the existing scheme, the terminal performs CSI measurement and reporting based on the CSI reporting configuration configured by the network. For one CSI reporting, one corresponding reference signal resource is configured for channel measurement. The base station, when operating in a hybrid full-duplex and half-duplex mode, may switch to half-duplex mode at some times, and switch to full-duplex mode at some times. Such switching between full-duplex mode and half-duplex mode requires corresponding changes to the antenna configuration of the base station, and the corresponding spatial characteristics differ. When the terminal performs channel measurement based on the downlink reference signal sent by the base station in full-duplex mode or half-duplex mode, different measurement results are obtained due to the change in spatial characteristics, which results in a relatively low degree of matching between the measurement result and the downlink reference signal, thereby leading to poor accuracy in CSI reporting. In addition, when the terminal averages multiple measurement results, averaging the results of measurements performed based on reference signals sent by the base station using different antenna configurations may lead to inaccurate channel measurement information.

To solve the above problems, in the CSI report transmission method according to an embodiment of this application, the terminal can receive a CSI reporting configuration from the base station; and send, based on the CSI reporting configuration, a first CSI report to the network-side device in a first time unit; where the first CSI report includes CSI measured in a second time unit, and the second time unit is determined based on at least one of a third time unit and a first time-frequency type; and the third time unit is determined based on the first time unit and a preset offset value, and the first time-frequency type includes either of the following: a time-frequency type of the third time unit, and a time-frequency type indicated by the base station. Through this solution, since the first CSI report sent by the terminal to the network-side device in the first time unit includes the CSI measured in the second time unit, and the second time unit is determined based on at least one of the third time unit and the first time-frequency type, the degree of matching between the measurement result and the downlink reference signal can be improved, thereby improving the accuracy of CSI reporting.

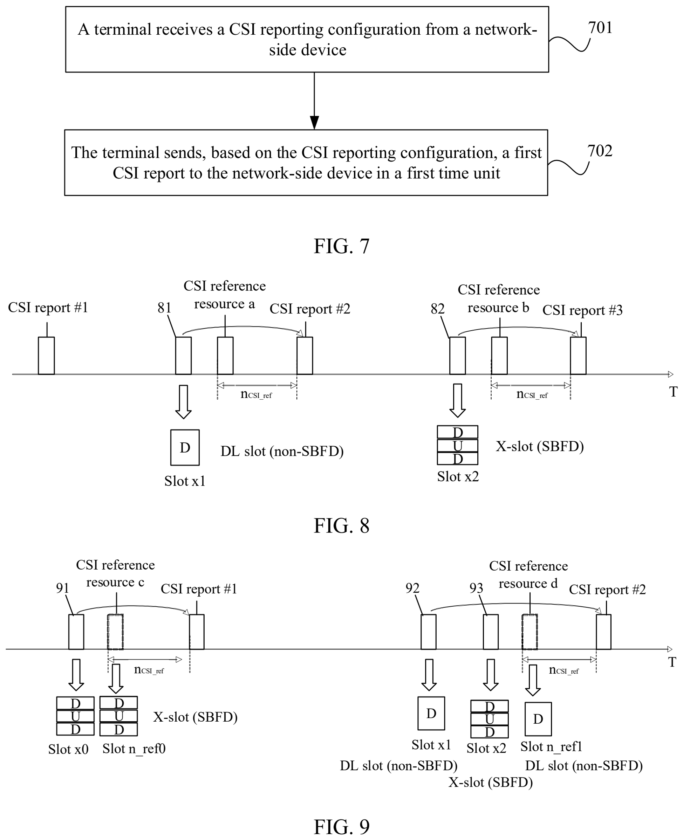

An embodiment of this application provides a CSI report transmission method. FIG. 7 is a flowchart of a CSI report transmission method according to an embodiment of this application. As shown in FIG. 7, the CSI report transmission method according to the embodiment of this application may include the following steps 701 and 702.

Step 701: A terminal receives a CSI reporting configuration from a network-side device.

Optionally, in an embodiment of this application, the CSI reporting configuration may include: at least one reference signal resource or at least one reference signal resource set.

Optionally, in an embodiment of this application, each reference signal resource set in the at least one reference signal resource set may include: at least two reference signal resources.

Optionally, in an embodiment of this application, the network-side device may configure the reference signal resources in each reference signal resource set.

Optionally, in an embodiment of this application, at each CSI measurement time of the terminal, one or more reference signal resource sets may be effective or activated simultaneously.

Optionally, in an embodiment of this application, the network-side device may perform an activation operation or a deactivation operation on one or more reference signal resource sets in the at least one reference signal resource set according to a requirement.

Optionally, in an embodiment of this application, the reference signal resource in the CSI reporting configuration may be transmitted in a subband full duplex (subband full duplex, SBFD) slot, or may be transmitted in a non-SBFD (that is, non-subband full duplex) slot.

In the embodiments of this application, since the CSI reporting configuration may include: at least one reference signal resource or at least one reference signal resource set, different CSI reporting configurations can be received by the terminal according to requirements, thereby improving the flexibility of CSI reporting.

Optionally, in an embodiment of this application, the at least one reference signal resource may include at least one of the following: a CSI-RS resource, a CSI interference measurement (CSI Interference Measurement, CSI-IM) resource, and an SRS resource.

Optionally, in an embodiment of this application, the CSI-RS resource may be used for channel measurement or interference measurement.

Optionally, in an embodiment of this application, the CSI interference measurement resource may be used for interference measurement.

Optionally, in an embodiment of this application, the SRS resource may be used for cross link interference (cross link interference, CLI) measurement.

In the embodiments of this application, since the at least one reference signal resource may include at least one of the following: a CSI-RS resource, a CSI-IM resource, and an SRS resource, the diversity of the CSI reporting configuration can be enriched, thereby further improving the flexibility of CSI reporting.

Optionally, in an embodiment of this application, the at least one reference signal resource set includes at least one of the following: a CSI-RS resource set, a CSI-IM resource set, and an SRS resource set.

Optionally, in an embodiment of this application, the reference signal resources in the CSI-RS resource set may all be CSI-RS resources.

Optionally, in an embodiment of this application, the reference signal resources in the CSI-IM resource set may all be CSI-IM resources.

Optionally, in an embodiment of this application, the reference signal resources in the SRS resource set may all be SRS resources.

In the embodiments of this application, since the at least one reference signal resource set includes at least one of the following: a CSI-RS resource set, a CSI-IM resource set, and an SRS resource set, the diversity of the CSI reporting configuration can be further enriched, thereby further improving the flexibility of CSI reporting.

Optionally, in an embodiment of this application, each reference signal resource in the at least one reference signal resource corresponds to at least one time-frequency type.

Optionally, in an embodiment of this application, the time-frequency type may include at least one of the following: a time domain type, a time domain format, and a frequency domain format indicated by full-duplex subband configuration.

Optionally, in an embodiment of this application, the time-frequency type may be: a full-duplex time-frequency type or a half-duplex time-frequency type.

Optionally, in an embodiment of this application, the full-duplex may include SBFD.

Optionally, in an embodiment of this application, the half-duplex may include DL, UL or non-FD (that is, non-full duplex); where DL means that all bands in frequency domain are used for DL, UL means that all bands in frequency domain are used for UL, and non-FD may include non-SBFD.

Optionally, in an embodiment of this application, the time domain type may include a slot type, a symbol type, or the like, where the slot type may be SBFD slot or non-SBFD slot, and the symbol type may be SBFD symbol or non-SBFD symbol.

Optionally, in an embodiment of this application, the non-SBFD slot refers to a DL slot or UL slot, that is, a slot for half-duplex transmission.

Optionally, in an embodiment of this application, measurements for different slot types may include: Case 1: performing CLI measurement in an SBFD slot, and performing channel/signal measurement and interference measurement in a non-SBFD slot; and Case 2: performing corresponding CSI measurement and CLI measurement in an SBFD slot, and performing CSI and IM measurement in a non-SBFD slot.

Optionally, in an embodiment of this application, the time domain type may be a time domain type indicated by xdd-UL-DL-Configuration, for example, Full DL, Full UL, or SBFD X.

Optionally, in an embodiment of this application, the time domain format may include a slot format, a symbol format, or the like.

Optionally, in an embodiment of this application, the time domain format may be a time domain format indicated by TDD-UL-DL-Configuration, for example, DL, UL, or Flexible.

Optionally, in an embodiment of this application, the frequency domain format indicated by the full-duplex subband configuration may include: DL subband (that is, DL subband), UL subband, Guard band (that is, guard band), DL bandwidth part (Bandwidth Part, BWP), UL BWP, and the like.

In the embodiments of this application, since each reference signal resource in the at least one reference signal resource may correspond to at least one time-frequency type, the diversity of the CSI reporting configuration can be further enriched, thereby further improving the flexibility of CSI reporting.

Optionally, in an embodiment of this application, each reference signal resource set in the at least one reference signal resource set corresponds to at least one time-frequency type.

Optionally, in an embodiment of this application, the each reference signal resource set may include reference signals to be transmitted in different time-frequency types.

For example, reference signal resource set 1 includes reference signals to be transmitted in SBFD slots, and reference signal resource set 2 includes reference signals to be transmitted in non-SBFD slots.

Optionally, in an embodiment of this application, if a reference signal resource set is activated, reference signal transmission of a time-frequency type corresponding to the reference signal resource set is activated.

Optionally, in an embodiment of this application, the network-side device may configure a correspondence between the reference signal resource sets and time-frequency types.

In the embodiments of this application, since each reference signal resource set in the at least one reference signal resource set may correspond to at least one time-frequency type, the diversity of the CSI reporting configuration can be further enriched, thereby further improving the flexibility of CSI reporting.

Step 702: The terminal sends, based on the CSI reporting configuration, a first CSI report to the network-side device in a first time unit.

The first CSI report includes CSI measured in a second time unit, and the second time unit is determined based on at least one of a third time unit and a first time-frequency type.

In an embodiment of this application, the third time unit is determined based on the first time unit and a preset offset value, and the first time-frequency type includes either of the following: a time-frequency type of the third time unit, and a time-frequency type indicated by the network-side device.

Optionally, in an embodiment of this application, the time unit may include: a slot, a subframe, a symbol, a sub-slot (that is, sub-slot), a radio frame, and the like.

Optionally, in an embodiment of this application, the preset offset value may be predefined or preconfigured.

Optionally, in an embodiment of this application, the third time unit may be: a time domain location obtained by subtracting the preset offset value from a time domain location of the first time unit.

Optionally, in an embodiment of this application, the third time unit may be a time domain location of a first CSI reference resource.

Optionally, in an embodiment of this application, the first CSI reference resource is: a corresponding CSI reference resource for sending the first CSI report in the first time unit.

Optionally, in an embodiment of this application, that the second time unit is determined based on at least one of a third time unit and a first time-frequency type may include: the second time unit is determined based on a transmission occasion of at least one first reference signal that is before the third time unit.

It can be understood that the second time unit may be determined based on one or more transmission occasions that are before the third time unit.

In the embodiments of this application, since the second time unit is determined based on a transmission occasion of at least one first reference signal that is before the third time unit, the flexibility of determining the second time unit can be improved.

Optionally, in an embodiment of this application, the at least one first reference signal may be: one first reference signal.

The one first reference signal includes any one of the following 1.1 to 1.3.

### 1.1. A reference signal closest to the third time unit

In an embodiment of this application, the second time unit may be determined based only on the third time unit.

Optionally, in an embodiment of this application, being closest to the third time unit means that the time of receiving the one first reference signal is closest to the time domain location corresponding to the third time unit.

For example, the one first reference signal is: a CSI-RS closest to the third time unit. Then, the terminal can determine a time unit, in which a transmission occasion of the CSI-RS falls, as the second time unit. If the time-frequency type of the second time unit is a non-SBFD slot (that is, DL slot), the CSI included in the first CSI report corresponds to the non-SBFD slot.

For another example, as shown in FIG. 8, for CSI report #2 (that is, the first CSI report), the CSI included is CSI information measured on a non-SBFD slot. This is because before CSI reference resource a (that is, the first CSI reference resource, which is also the third time unit), a reference signal corresponding to the non-SBFD slot is transmitted on a transmission opportunity of the closest reference signal 81 (that is, the one first reference signal).

For CSI report #3 (that is, the first CSI report), the CSI included is CSI information measured on an SBFD slot. This is because before CSI reference resource b (that is, the first CSI reference resource, which is also the third time unit), a reference signal corresponding to the SBFD slot is transmitted on a transmission opportunity of the closest reference signal 82 (that is, the one first reference signal).

### 1.2. A reference signal closest to the third time unit and having a same time-frequency type as the third time unit

In an embodiment of this application, the second time unit may be determined based on the third time unit and the first time-frequency type.

For example, as shown in FIG. 9, for CSI report #1 (that is, the first CSI report), the CSI included is CSI information measured on an SBFD slot. This is because a slot type corresponding to CSI reference resource c (that is, the first CSI reference resource, which is also the third time unit) is an SBFD slot. Therefore, the CSI included in the CSI report is a result obtained by measuring a reference signal 91 (that is, the one first reference signal) received on a closest SBFD slot before CSI reference resource c.

For CSI report #2 (that is, the first CSI report), the CSI included is CSI information measured on a non-SBFD slot. This is because a slot type corresponding to CSI reference resource d (that is, the first CSI reference resource, which is also the third time unit) is a non-SBFD slot. Therefore, the CSI included in the CSI report is a result obtained by measuring a reference signal 92 (that is, the one first reference signal) received on a closest non-SBFD slot before CSI reference resource d. Although a transmission occasion of the closest reference signal 93 before CSI reference resource d is on an SBFD slot, due to its inconsistency with the slot type of CSI reference resource d, the terminal does not perform CSI measurement at the transmission occasion of this reference signal.

### 1.3. A reference signal closest to the third time unit and having a same time-frequency type as indicated by the network-side device

In an embodiment of this application, the second time unit may be determined based on the third time unit and the first time-frequency type.

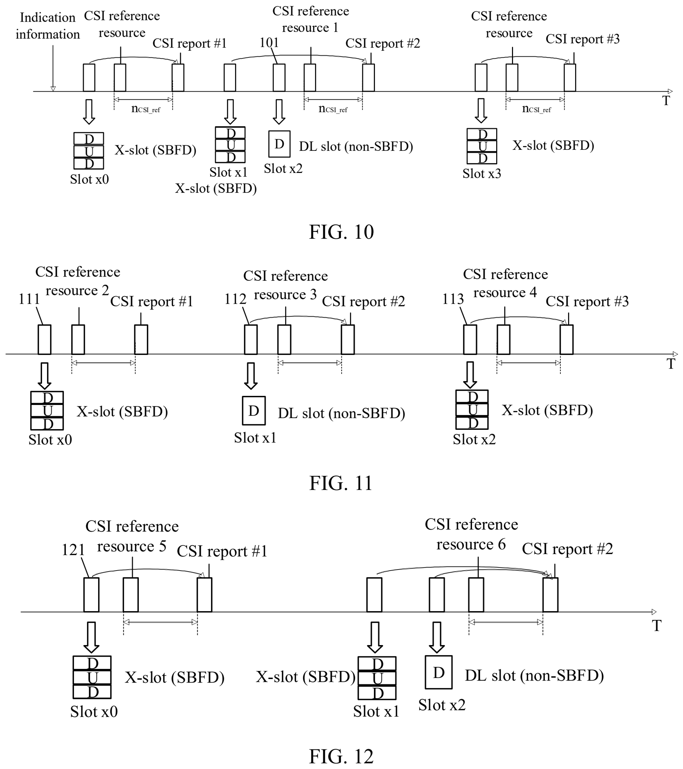

For example, as shown in FIG. 10, the network-side device sends indication information before CSI report #1 (that is, the first CSI report), where the indication information indicates that the CSI included in the CSI report corresponds to the SBFD slot type (that is, the time-frequency type indicated by the network-side device). Based on the indication, the CSI included in CSI reports #1, #2, and #3 are all CSI information measured on SBFD slots.

For CSI report #2 (that is, the first CSI report), although the transmission occasion of the closest reference signal 101 before CSI reference resource 1 (that is, the first CSI reference resource, which is also the third time unit) is on a non-SBFD slot, due to its inconsistency with the slot type indicated by the network-side device, the terminal does not perform CSI measurement at the transmission occasion of the reference signal 101.

It should be noted that the above reference signals are all available reference signals, that is, satisfying the following conditions: a downlink time unit exists, and the downlink time unit is configured with a reference signal.

In the embodiments of this application, since the at least one first reference signal may be any one of the above 1.1 to 1.3, the flexibility of determining the second time unit can be further improved.

Optionally, in an embodiment of this application, when the terminal determines the second time unit based on the one first reference signal, the network-side device may restrict or not restrict a time at which the terminal performs CSI measurement; and if the network-side device does not restrict the time at which the terminal performs CSI measurement, the terminal can average CSI information obtained at multiple CSI measurement times that are before the third time unit, and report an average value obtained.

The CSI report transmission method according to an embodiment of this application is exemplarily described below with reference to the accompanying drawings.

For example, assuming that the network-side device does not restrict the time at which the terminal performs CSI measurement, as shown in FIG. 11, for CSI report #1 (that is, the first CSI report), the CSI included is CSI information measured on an SBFD slot. This is because before CSI reference resource 2 (that is, the first CSI reference resource, which is also the third time unit), a slot type corresponding to a transmission opportunity of the closest reference signal 111 (that is, the one first reference signal) is an SBFD slot. Therefore, the CSI included in the CSI report is a result obtained by measuring the reference signal received on the SBFD slot.

For CSI report #2 (that is, the first CSI report), the CSI included is CSI information measured on a non-SBFD slot. This is because before CSI reference resource 3 (that is, the first CSI reference resource, which is also the third time unit), a slot type corresponding to a transmission opportunity of the closest reference signal 112 (that is, the one first reference signal) is a non-SBFD slot. Therefore, the CSI included in the CSI report is a result obtained by measuring the reference signal received on the non-SBFD slot.

For CSI report #3 (that is, the first CSI report), the CSI included is CSI information measured on an SBFD slot. This is because before CSI reference resource 4 (that is, the first CSI reference resource, which is also the third time unit), a reference signal corresponding to the SBFD slot is transmitted on a transmission opportunity of the closest reference signal 113 (that is, the one first reference signal). Additionally, the CSI included in CSI report #3 is obtained by averaging the CSI of CSI report #1 and the CSI of CSI report #3. This is because the CSI of CSI report #1 is a measurement result corresponding to the SBFD slot, and the CSI of CSI report #3 is also a measurement result corresponding to the SBFD slot, and the terminal can average these two measurement results to obtain a statistical result. The CSI of CSI report #2 is a measurement result corresponding to the non-SBFD slot, so it cannot be used together with the CSI of CSI report #3 for statistical averaging.

Optionally, in an embodiment of this application, the at least one first reference signal may be: at least two first reference signals.

The at least two first reference signals satisfy any one of the following 2.1 to 2.3.

2.1. Corresponding time-frequency types are the same as a time-frequency type of a target reference signal, where the target reference signal is: a reference signal closest to the third time unit among the at least two first reference signals.

2.2. Corresponding time-frequency types are the same as the time-frequency type of the third time unit.

2.3. Corresponding time-frequency types are the same as the time-frequency type indicated by the network-side device.

Optionally, in an embodiment of this application, the second time unit may be at least two time units, and the second time unit may be determined based on transmission occasions of all reference signals that are before the third time unit.

For example, as shown in FIG. 12, for CSI report #1 (that is, the first CSI report), the CSI included is CSI information measured on an SBFD slot. This is because before CSI reference resource 5 (that is, the first CSI reference resource, which is also the third time unit), there is only one transmission opportunity of reference signal 121 (that is, the one first reference signal), and a slot type corresponding to the transmission opportunity of the reference signal 121 is an SBFD slot, so the CSI included in the CSI report is a result obtained by measuring the reference signal received on the SBFD slot.

For CSI report #2 (that is, the first CSI report), the CSI included is CSI information 1 measured on a non-SBFD slot and CSI information 2 measured on an SBFD slot. This is because before CSI reference resource 6 (that is, the first CSI reference resource, which is also the third time unit), there are transmission opportunities of multiple reference signals (that is, the at least two first reference signals), corresponding to the non-SBFD slot and the SBFD slot. Therefore, the CSI report includes both the measurement result on the SBFD slot and the measurement result on the non-SBFD slot.

In the embodiments of this application, since the at least one first reference signal may be any one of the above 1.1 to 1.3, the flexibility of determining the second time unit can be further improved.

Optionally, in an embodiment of this application, the first reference signal may be: a reference signal corresponding to a reference signal resource included in the CSI reporting configuration.

Optionally, in an embodiment of this application, the reference signal resource includes any one of the following:
a reference signal resource corresponding to a time-frequency type of the second time unit;
a reference signal resource set corresponding to the time-frequency type of the second time unit;
a reference signal resource corresponding to the time-frequency type of the third time unit;
a reference signal resource set corresponding to the time-frequency type of the third time unit;
a reference signal resource corresponding to the time-frequency type indicated by the network-side device; and
a reference signal resource set corresponding to the time-frequency type indicated by the network-side device.

In the embodiments of this application, since the first reference signal may be: different reference signal resources included in the CSI reporting configuration, the second time unit can be determined based on the first reference signal from different levels, thereby improving the flexibility of determining the second time unit.

Optionally, in an embodiment of this application, the first reference signal may be any one of the following: a CSI-RS, a CSI-IM, and an SRS.

Optionally, in an embodiment of this application, the first reference signal being the CSI-RS, the CSI-IM, or the SRS may be configured by the network-side device or predefined.

In the embodiments of this application, since the first reference signal may be any one of the CSI-RS, the CSI-IM, and the SRS, the second time unit can be determined based on first reference signals with different functions, thereby further improving the flexibility of determining the second time unit.

For other descriptions in the embodiments of this application, reference may be specifically made to the relevant descriptions in the above embodiments. To avoid repetition, details are not described herein.

In the CSI report transmission method according to the embodiments of this application, since the first CSI report sent by the terminal to the network-side device in the first time unit includes the CSI measured in the second time unit, and the second time unit is determined based on at least one of the third time unit and the first time-frequency type, the degree of matching between measurement results and downlink reference signals can be improved, thereby improving the accuracy of CSI reporting.

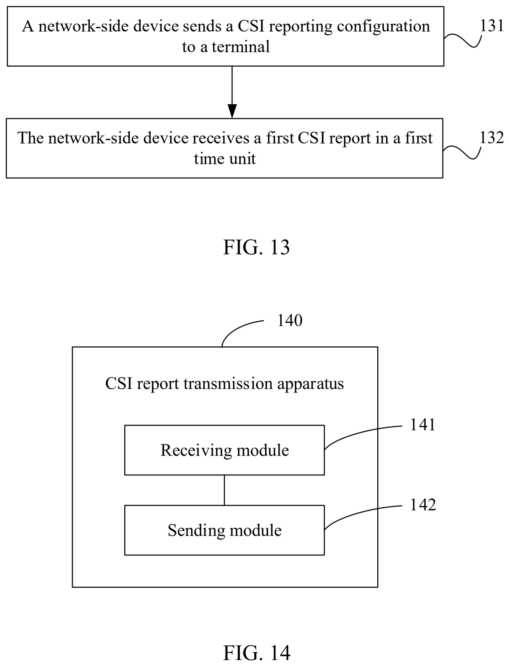

An embodiment of this application provides another CSI report transmission method. FIG. 13 is a flowchart of a CSI report transmission method according to an embodiment of this application. As shown in FIG. 13, the CSI report transmission method according to the embodiment of this application may include the following steps 131 and 132.

Step 131: A network-side device sends a CSI reporting configuration to a terminal.

The CSI reporting configuration is used to instruct the terminal to send a first CSI report in a first time unit.

Optionally, in an embodiment of this application, the CSI reporting configuration may include: at least one reference signal resource or at least one reference signal resource set.

Optionally, in an embodiment of this application, the at least one reference signal resource may include at least one of the following: a CSI-RS resource, a CSI-IM resource, and an SRS resource.

Optionally, in an embodiment of this application, the at least one reference signal resource set includes at least one of the following: a CSI-RS resource set, a CSI-IM resource set, and an SRS resource set.

Optionally, in an embodiment of this application, each reference signal resource in the at least one reference signal resource corresponds to at least one time-frequency type.

Optionally, in an embodiment of this application, the time-frequency type may include at least one of the following: a time domain type, a time domain format, and a frequency domain format indicated by full-duplex subband configuration.

Optionally, in an embodiment of this application, each reference signal resource set in the at least one reference signal resource set corresponds to at least one time-frequency type.

Step 132: The network-side device receives the first CSI report in the first time unit.

The first CSI report includes CSI measured by the terminal in a second time unit, and the second time unit is determined by the terminal based on at least one of a third time unit and a first time-frequency type.

In an embodiment of this application, the third time unit is determined by the terminal based on the first time unit and a preset offset value, and the first time-frequency type includes either of the following: a time-frequency type of the third time unit, and a time-frequency type indicated by the network-side device.

Optionally, in an embodiment of this application, the third time unit may be a time domain location of a first CSI reference resource.

Optionally, in an embodiment of this application, that the second time unit is determined by the terminal based on at least one of a third time unit and a first time-frequency type may include: the second time unit is determined by the terminal based on a transmission occasion of at least one first reference signal that is before the third time unit.

Optionally, in an embodiment of this application, the at least one first reference signal may be: one first reference signal.

The one first reference signal includes any one of the following:
a reference signal closest to the third time unit;
a reference signal closest to the third time unit and having a same time-frequency type as the third time unit; and
a reference signal closest to the third time unit and having a same time-frequency type as indicated by the network-side device.

Optionally, in an embodiment of this application, the at least one first reference signal may be: at least two first reference signals.

The at least two first reference signals satisfy any one of the following:
corresponding time-frequency types are the same as a time-frequency type of a target reference signal, where the target reference signal is: a reference signal closest to the third time unit among the at least two first reference signals;
corresponding time-frequency types are the same as the time-frequency type of the third time unit; and
corresponding time-frequency types are the same as the time-frequency type indicated by the network-side device.

Optionally, in an embodiment of this application, the first reference signal may be: a reference signal corresponding to a reference signal resource included in the CSI reporting configuration.

Optionally, in an embodiment of this application, the reference signal resource includes any one of the following:
a reference signal resource corresponding to a time-frequency type of the second time unit;
a reference signal resource set corresponding to the time-frequency type of the second time unit;
a reference signal resource corresponding to the time-frequency type of the third time unit;
a reference signal resource set corresponding to the time-frequency type of the third time unit;
a reference signal resource corresponding to the time-frequency type indicated by the network-side device; and
a reference signal resource set corresponding to the time-frequency type indicated by the network-side device.

Optionally, in an embodiment of this application, the first reference signal may be any one of the following: a CSI-RS, a CSI-IM, and an SRS.

In the CSI report transmission method according to this embodiment of this application, since the first CSI report received by the network-side device in the first time unit includes the CSI measured by the terminal in the second time unit, and the second time unit is determined by the terminal based on at least one of the third time unit and the first time-frequency type, the degree of matching between measurement results of the terminal and downlink reference signals can be improved, thereby improving the accuracy of CSI reporting.

For other descriptions in the embodiment of this application, as well as the technical effects that can be achieved by each technical feature, reference may be specifically made to the relevant descriptions in the terminal-side method embodiments. To avoid repetition, details are not described herein.

The CSI report transmission method according to the embodiments of this application may be performed by a CSI report transmission apparatus. In the embodiments of this application, the CSI report transmission apparatus performing the CSI report transmission method is taken as an example to describe a CSI report transmission apparatus according to an embodiment of this application.

With reference to FIG. 14, an embodiment of this application provides a CSI report transmission apparatus 140. The CSI report transmission apparatus 140 may include a receiving module 141 and a sending module 142. The receiving module 141 may be configured to receive a CSI reporting configuration from a network-side device. The sending module 142 may be configured to send, based on the CSI reporting configuration received by the receiving module 141, a first CSI report to the network-side device in a first time unit; where the first CSI report includes CSI measured in a second time unit, and the second time unit is determined based on at least one of a third time unit and a first time-frequency type; and the third time unit is determined based on the first time unit and a preset offset value, and the first time-frequency type includes either of the following: a time-frequency type of the third time unit, and a time-frequency type indicated by the network-side device.

In one possible implementation, that the second time unit is determined based on at least one of a third time unit and a first time-frequency type may include: the second time unit is determined based on a transmission occasion of at least one first reference signal that is before the third time unit.

In one possible implementation, the at least one first reference signal may be: one first reference signal; where the one first reference signal includes any one of the following: a reference signal closest to the third time unit; a reference signal closest to the third time unit and having a same time-frequency type as the third time unit; and a reference signal closest to the third time unit and having a same time-frequency type as indicated by the network-side device.

In one possible implementation, the at least one first reference signal may be: at least two first reference signals; where the at least two first reference signals satisfy any one of the following: corresponding time-frequency types are the same as a time-frequency type of a target reference signal, where the target reference signal is: a reference signal closest to the third time unit among the at least two first reference signals; corresponding time-frequency types are the same as the time-frequency type of the third time unit; and corresponding time-frequency types are the same as the time-frequency type indicated by the network-side device.

In one possible implementation, the first reference signal may be: a reference signal corresponding to a reference signal resource included in the CSI reporting configuration.

In one possible implementation, the reference signal resource may include any one of the following: a reference signal resource corresponding to a time-frequency type of the second time unit; a reference signal resource set corresponding to the time-frequency type of the second time unit; a reference signal resource corresponding to the time-frequency type of the third time unit; a reference signal resource set corresponding to the time-frequency type of the third time unit; a reference signal resource corresponding to the time-frequency type indicated by the network-side device; and a reference signal resource set corresponding to the time-frequency type indicated by the network-side device.

In one possible implementation, the first reference signal may be any one of the following: a CSI-RS, a CSI-IM, and an SRS.

In one possible implementation, the CSI reporting configuration may include: at least one reference signal resource or at least one reference signal resource set; where the at least one reference signal resource may include at least one of the following: a CSI-RS resource, a CSI-IM resource, and an SRS resource; and the at least one reference signal resource set may include at least one of the following: a CSI-RS resource set, a CSI-IM resource set, and an SRS resource set.

In one possible implementation, each reference signal resource in the at least one reference signal resource may correspond to at least one time-frequency type.

In one possible implementation, each reference signal resource set in the at least one reference signal resource set may correspond to at least one time-frequency type.

In one possible implementation, the third time unit may be a time domain location of a first CSI reference resource.

In the CSI report transmission apparatus according to this embodiment of this application, since the first CSI report sent by the CSI report transmission apparatus to the network-side device in the first time unit includes the CSI measured in the second time unit, and the second time unit is determined based on at least one of the third time unit and the first time-frequency type, the degree of matching between measurement results and downlink reference signals can be improved, thereby improving the accuracy of CSI reporting.

The CSI report transmission apparatus in the embodiments of this application may be an electronic device, such as an electronic device having an operating system, or may be a component in an electronic device, such as an integrated circuit or a chip. The electronic device may be a terminal. For example, the terminal may include but is not limited to the types of the terminal 11 listed above, which are not specifically limited in the embodiments of this application.

The CSI report transmission apparatus according to this embodiment of this application can implement the processes implemented by the terminal-side method embodiments, with the same technical effects achieved. To avoid repetition, details are not described herein.

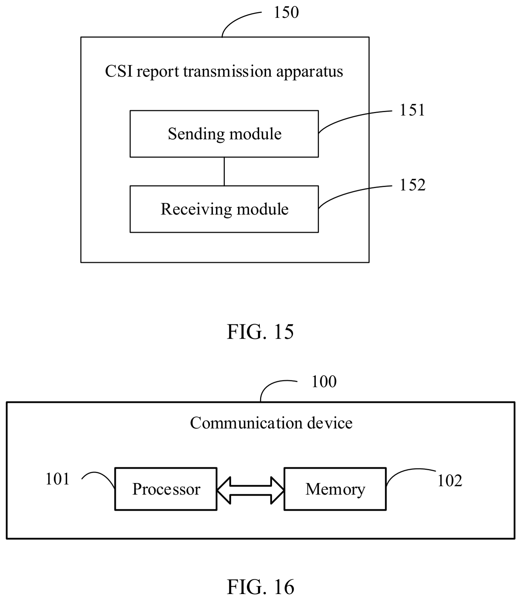

With reference to FIG. 15, an embodiment of this application provides a CSI report transmission apparatus 150. The CSI report transmission apparatus 150 may include a sending module 151 and a receiving module 152. The sending module 151 may be configured to send a CSI reporting configuration to a terminal, where the CSI reporting configuration is used to instruct the terminal to send a first CSI report in a first time unit. The receiving module 152 may be configured to receive the first CSI report in the first time unit; where the first CSI report includes CSI measured by the terminal in a second time unit, and the second time unit is determined by the terminal based on at least one of a third time unit and a first time-frequency type; and the third time unit is determined by the terminal based on the first time unit and a preset offset value, and the first time-frequency type includes either of the following: a time-frequency type of the third time unit, and a time-frequency type indicated by the CSI report transmission apparatus 150.

In one possible implementation, that the second time unit is determined by the terminal based on at least one of a third time unit and a first time-frequency type may include: the second time unit is determined by the terminal based on a transmission occasion of at least one first reference signal that is before the third time unit.

In one possible implementation, the at least one first reference signal may be: one first reference signal; where the one first reference signal includes any one of the following: a reference signal closest to the third time unit; a reference signal closest to the third time unit and having a same time-frequency type as the third time unit; and a reference signal closest to the third time unit and having a same time-frequency type as indicated by the CSI report transmission apparatus 150.

In one possible implementation, the at least one first reference signal may be: at least two first reference signals; where the at least two first reference signals satisfy any one of the following: corresponding time-frequency types are the same as a time-frequency type of a target reference signal, where the target reference signal is: a reference signal closest to the third time unit among the at least two first reference signals; corresponding time-frequency types are the same as the time-frequency type of the third time unit; and corresponding time-frequency types are the same as the time-frequency type indicated by the CSI report transmission apparatus 150.

In one possible implementation, the first reference signal may be: a reference signal corresponding to a reference signal resource included in the CSI reporting configuration.

In one possible implementation, the reference signal resource may include any one of the following: a reference signal resource corresponding to a time-frequency type of the second time unit; a reference signal resource set corresponding to the time-frequency type of the second time unit; a reference signal resource corresponding to the time-frequency type of the third time unit; a reference signal resource set corresponding to the time-frequency type of the third time unit; a reference signal resource corresponding to the time-frequency type indicated by the CSI report transmission apparatus 150; and a reference signal resource set corresponding to the time-frequency type indicated by the CSI report transmission apparatus 150.

In one possible implementation, the first reference signal may be any one of the following: a CSI-RS, a CSI-IM, and an SRS.

In one possible implementation, the CSI reporting configuration may include: at least one reference signal resource or at least one reference signal resource set; where the at least one reference signal resource may include at least one of the following: a CSI-RS resource, a CSI-IM resource, and an SRS resource; and the at least one reference signal resource set may include at least one of the following: a CSI-RS resource set, a CSI-IM resource set, and an SRS resource set.

In one possible implementation, each reference signal resource in the at least one reference signal resource may correspond to at least one time-frequency type.

In one possible implementation, each reference signal resource set in the at least one reference signal resource set may correspond to at least one time-frequency type.

In one possible implementation, the third time unit may be a time domain location of a first CSI reference resource.

In the CSI report transmission apparatus according to this embodiment of this application, since the first CSI report received by the CSI report transmission apparatus in the first time unit includes the CSI measured by the terminal in the second time unit, and the second time unit is determined by the terminal based on at least one of the third time unit and the first time-frequency type, the degree of matching between measurement results of the terminal and downlink reference signals can be improved, thereby improving the accuracy of CSI reporting.

The CSI report transmission apparatus in this embodiment of this application may be an electronic device, such as an electronic device having an operating system, or may be a component in an electronic device, such as an integrated circuit or a chip. The electronic device may be another device different from a terminal. For example, the another device may be a server, a network attached storage (Network Attached Storage, NAS), or the like, which is not specifically limited in the embodiments of this application.

The CSI report transmission apparatus according to this embodiment of this application can implement the processes implemented by the network-side device method embodiments, with the same technical effects achieved. To avoid repetition, details are not described herein.

As shown in FIG. 16, an embodiment of this application further provides a communication device 100 including a processor 101 and a memory 102. The memory 102 stores a program or instructions capable of running on the processor 101. For example, in a case that the communication device 100 is a terminal, when the program or instructions are executed by the processor 101, the steps of the terminal-side method embodiments are implemented, with the same technical effects achieved. In a case that the communication device 100 is a network-side device, when the program or instructions are executed by the processor 101, the steps of the network-side device method embodiments are implemented, with the same technical effects achieved. To avoid repetition, details are not described herein.

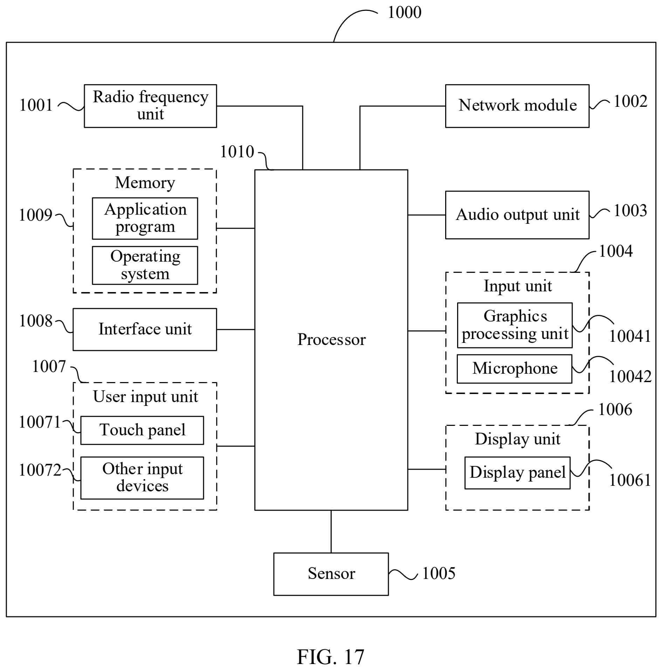

An embodiment of this application further provides a terminal including a processor and a communication interface. The communication interface is coupled to the processor, and the processor is configured to run a program or instructions to implement the steps of the terminal-side method embodiments. The communication interface is configured to receive a CSI reporting configuration from a network-side device; and send, based on the received CSI reporting configuration, a first CSI report to the network-side device in a first time unit; where the first CSI report includes CSI measured in a second time unit, and the second time unit is determined based on at least one of a third time unit and a first time-frequency type; and the third time unit is determined based on the first time unit and a preset offset value, and the first time-frequency type includes either of the following: a time-frequency type of the third time unit, and a time-frequency type indicated by the network-side device. This terminal embodiment corresponds to the terminal-side method embodiment, and the implementation processes and implementations of the above method embodiment can be applied to this terminal embodiment, with the same technical effects achieved. Specifically, FIG. 17 is a schematic diagram of a hardware structure of a terminal implementing the embodiments of this application.

The terminal 1000 includes but is not limited to at least some of the following components: a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

Persons skilled in the art can understand that the terminal 1000 may further include a power supply (for example, a battery) supplying power to the components, and the power supply may be logically connected to the processor 1010 through a power management system, so as to implement functions such as charging management, discharging management, and power consumption management through the power management system. The structure of the terminal shown in FIG. 17 does not constitute any limitation on the terminal. The terminal may include more or fewer components than shown in the figure, or a combination of some components, or the components disposed differently. Details are not described herein.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but is not limited to a physical keyboard, a function key (such as a volume control key or an on/off key), a trackball, a mouse, and a joystick. Details are not described herein.

In an embodiment of this application, after receiving downlink data from a network-side device, the radio frequency unit 1001 can transmit the downlink data to the processor 1010 for processing. Additionally, the radio frequency unit 1001 can send uplink data to the network-side device. Typically, the radio frequency unit 1001 includes but is not limited to an antenna, an amplifier, a transceiver, a coupler, a low noise amplifier, and a duplexer.

The memory 1009 may be configured to store software programs or instructions and various data. The memory 1009 may mainly include a first storage area for storing programs or instructions and a second storage area for storing data. The first storage area may store an operating system, an application program or instructions required by at least one function (for example, a sound play function or an image play function), and the like. Additionally, the memory 1009 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct Rambus dynamic random access memory (Direct Rambus RAM, DRRAM). The memory 1009 in the embodiment of this application includes but is not limited to these and any other suitable types of memory.

The processor 1010 may include one or more processing units. Optionally, an application processor and a modem processor are integrated in the processor 1010, where the application processor mainly processes operations related to an operating system, a user interface, an application program, and the like, and the modem processor, such as a baseband processor, mainly processes wireless communication signals. It can be understood that the modem processor may alternatively be not integrated in the processor 1010.

The radio frequency unit 1001 may be configured to receive a CSI reporting configuration from a network-side device; and send, based on the received CSI reporting configuration, a first CSI report to the network-side device in a first time unit; where the first CSI report includes CSI measured in a second time unit, and the second time unit is determined based on at least one of a third time unit and a first time-frequency type; and the third time unit is determined based on the first time unit and a preset offset value, and the first time-frequency type includes either of the following: a time-frequency type of the third time unit, and a time-frequency type indicated by the network-side device.

In one possible implementation, that the second time unit is determined based on at least one of a third time unit and a first time-frequency type may include: the second time unit is determined based on a transmission occasion of at least one first reference signal that is before the third time unit.

In one possible implementation, the at least one first reference signal may be: one first reference signal; where the one first reference signal includes any one of the following: a reference signal closest to the third time unit; a reference signal closest to the third time unit and having a same time-frequency type as the third time unit; and a reference signal closest to the third time unit and having a same time-frequency type as indicated by the network-side device.

In one possible implementation, the at least one first reference signal may be: at least two first reference signals; where the at least two first reference signals satisfy any one of the following: corresponding time-frequency types are the same as a time-frequency type of a target reference signal, where the target reference signal is: a reference signal closest to the third time unit among the at least two first reference signals; corresponding time-frequency types are the same as the time-frequency type of the third time unit; and corresponding time-frequency types are the same as the time-frequency type indicated by the network-side device.

In one possible implementation, the first reference signal may be: a reference signal corresponding to a reference signal resource included in the CSI reporting configuration.

In one possible implementation, the reference signal resource may include any one of the following: a reference signal resource corresponding to a time-frequency type of the second time unit; a reference signal resource set corresponding to the time-frequency type of the second time unit; a reference signal resource corresponding to the time-frequency type of the third time unit; a reference signal resource set corresponding to the time-frequency type of the third time unit; a reference signal resource corresponding to the time-frequency type indicated by the network-side device; and a reference signal resource set corresponding to the time-frequency type indicated by the network-side device.

In one possible implementation, the first reference signal may be any one of the following: a CSI-RS, a CSI-IM, and an SRS.

In one possible implementation, the CSI reporting configuration may include: at least one reference signal resource or at least one reference signal resource set; where the at least one reference signal resource may include at least one of the following: a CSI-RS resource, a CSI-IM resource, and an SRS resource; and the at least one reference signal resource set may include at least one of the following: a CSI-RS resource set, a CSI-IM resource set, and an SRS resource set.

In one possible implementation, each reference signal resource in the at least one reference signal resource may correspond to at least one time-frequency type.

In one possible implementation, each reference signal resource set in the at least one reference signal resource set may correspond to at least one time-frequency type.

In one possible implementation, the third time unit may be a time domain location of a first CSI reference resource.

In the terminal according to this embodiment of this application, since the first CSI report sent by the terminal to the network-side device in the first time unit includes the CSI measured in the second time unit, and the second time unit is determined based on at least one of the third time unit and the first time-frequency type, the degree of matching between measurement results and downlink reference signals can be improved, thereby improving the accuracy of CSI reporting.

It can be understood that for the implementation process of each implementation mentioned in this embodiment, reference may be made to the relevant descriptions in the terminal-side method embodiments, with the same or corresponding technical effects achieved. To avoid repetition, details are not described herein.

An embodiment of this application further provides a network-side device including a processor and a communication interface. The communication interface is coupled to the processor, and the processor is configured to run a program or instructions to implement the steps of the network-side device method embodiments. The communication interface is configured to send a CSI reporting configuration to a terminal, where the CSI reporting configuration is used to instruct the terminal to send a first CSI report in a first time unit; and receive the first CSI report in the first time unit; where the first CSI report includes CSI measured by the terminal in a second time unit, and the second time unit is determined by the terminal based on at least one of a third time unit and a first time-frequency type; and the third time unit is determined by the terminal based on the first time unit and a preset offset value, and the first time-frequency type includes either of the following: a time-frequency type of the third time unit, and a time-frequency type indicated by the network-side device. This network-side device embodiment corresponds to the network-side device method embodiment, and the implementation processes and implementations of the above method embodiment can be applied to this network-side device embodiment, with the same technical effects achieved.

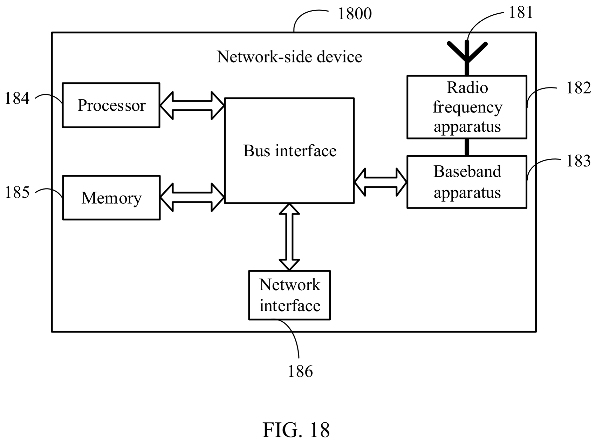

Specifically, an embodiment of this application further provides a network-side device. As shown in FIG. 18, the network-side device 1800 includes: an antenna 181, a radio frequency apparatus 182, a baseband apparatus 183, a processor 184, and a memory 185. The antenna 181 is connected to the radio frequency apparatus 182. In the uplink direction, the radio frequency apparatus 182 receives information through the antenna 181 and sends the received information to the baseband apparatus 183 for processing. In the downlink direction, the baseband apparatus 183 processes information to be sent and sends the information to the radio frequency apparatus 182, and the radio frequency apparatus 182 processes the received information and sends the information out through the antenna 181.

The method executed by the network-side device in the above embodiments can be implemented in the baseband apparatus 183, and the baseband apparatus 183 includes a baseband processor.

The baseband apparatus 183 may include, for example, at least one baseband processing unit, where a plurality of chips are disposed on the baseband processing unit. As shown in FIG. 18, one of the chips is, for example, the baseband processor, and connected to the memory 185 via a bus interface, to invoke the program in the memory 185 to perform the operations of the network-side device shown in the foregoing method embodiments.

The network-side device may further include a network interface 186. The interface is, for example, a common public radio interface (Common Public Radio Interface, CPRI).

Specifically, the network-side device 1800 in this embodiment of this application further includes: instructions or a program stored in the memory 185 and capable of running on the processor 184. The processor 184 calls the instructions or program in the memory 185 to execute the method executed by each module shown in FIG. 15, with the same technical effects achieved. To avoid repetition, details are not described herein.

The radio frequency apparatus 182 may be configured to send a CSI reporting configuration to a terminal, where the CSI reporting configuration is used to instruct the terminal to send a first CSI report in a first time unit; and receive the first CSI report in the first time unit; where the first CSI report includes CSI measured by the terminal in a second time unit, and the second time unit is determined by the terminal based on at least one of a third time unit and a first time-frequency type; and the third time unit is determined by the terminal based on the first time unit and a preset offset value, and the first time-frequency type includes either of the following: a time-frequency type of the third time unit, and a time-frequency type indicated by the network-side device 1800.

In one possible implementation, that the second time unit is determined by the terminal based on at least one of a third time unit and a first time-frequency type may include: the second time unit is determined by the terminal based on a transmission occasion of at least one first reference signal that is before the third time unit.

In one possible implementation, the at least one first reference signal may be: one first reference signal; where the one first reference signal includes any one of the following: a reference signal closest to the third time unit; a reference signal closest to the third time unit and having a same time-frequency type as the third time unit; and a reference signal closest to the third time unit and having a same time-frequency type as indicated by the network-side device 180.

In one possible implementation, the at least one first reference signal may be: at least two first reference signals; where the at least two first reference signals satisfy any one of the following: corresponding time-frequency types are the same as a time-frequency type of a target reference signal, where the target reference signal is: a reference signal closest to the third time unit among the at least two first reference signals; corresponding time-frequency types are the same as the time-frequency type of the third time unit; and corresponding time-frequency types are the same as the time-frequency type indicated by the network-side device 180.

In one possible implementation, the first reference signal may be: a reference signal corresponding to a reference signal resource included in the CSI reporting configuration.

In one possible implementation, the reference signal resource may include any one of the following: a reference signal resource corresponding to a time-frequency type of the second time unit; a reference signal resource set corresponding to the time-frequency type of the second time unit; a reference signal resource corresponding to the time-frequency type of the third time unit; a reference signal resource set corresponding to the time-frequency type of the third time unit; a reference signal resource corresponding to the time-frequency type indicated by the network-side device 180; and a reference signal resource set corresponding to the time-frequency type indicated by the network-side device 180.

In one possible implementation, the first reference signal may be any one of the following: a CSI-RS, a CSI-IM, and an SRS.

In one possible implementation, the CSI reporting configuration may include: at least one reference signal resource or at least one reference signal resource set; where the at least one reference signal resource may include at least one of the following: a CSI-RS resource, a CSI-IM resource, and an SRS resource; and the at least one reference signal resource set may include at least one of the following: a CSI-RS resource set, a CSI-IM resource set, and an SRS resource set.

In one possible implementation, each reference signal resource in the at least one reference signal resource may correspond to at least one time-frequency type.

In one possible implementation, each reference signal resource set in the at least one reference signal resource set may correspond to at least one time-frequency type.

In one possible implementation, the third time unit may be a time domain location of a first CSI reference resource.

In the network-side device according to this embodiment of this application, since the first CSI report received by the network-side device in the first time unit includes the CSI measured by the terminal in the second time unit, and the second time unit is determined by the terminal based on at least one of the third time unit and the first time-frequency type, the degree of matching between measurement results of the terminal and downlink reference signals can be improved, thereby improving the accuracy of CSI reporting.

It can be understood that for the implementation process of each implementation mentioned in this embodiment, reference may be made to the relevant descriptions in the network-side device method embodiments, with the same or corresponding technical effects achieved. To avoid repetition, details are not described herein.

An embodiment of this application further provides a readable storage medium. The readable storage medium stores a program or instructions, and when the program or instructions are executed by a processor, the processes of the foregoing CSI report transmission method embodiments are implemented, with the same technical effects achieved. To avoid repetition, details are not described herein.

The processor is the processor in the terminal described in the above embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor, and the processor is configured to run a program or instructions to implement the processes of the foregoing CSI report transmission method embodiments, with the same technical effects achieved. To avoid repetition, details are not described herein.

It should be understood that the chip mentioned in this embodiment of this application may also be referred to as a system-level chip, a system chip, a chip system, a system-on-chip chip, or the like.

An embodiment of this application further provides a computer program/program product. The computer program/program product is stored in a storage medium, and the computer program/program product is executed by at least one processor to implement the processes of the foregoing CSI report transmission method embodiments, with the same technical effects achieved. To avoid repetition, details are not described herein.

An embodiment of this application further provides a communication system including: a terminal and a network-side device. The terminal is configured to perform the steps of the foregoing terminal-side methods, and the network-side device is configured to perform the steps of the foregoing network-side device methods.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. The software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A channel state information CSI report transmission method, wherein the method comprises:
receiving, by a terminal, a CSI reporting configuration from a network-side device; and
sending, by the terminal based on the CSI reporting configuration, a first CSI report to the network-side device in a first time unit; wherein
the first CSI report comprises CSI measured in a second time unit, and the second time unit is determined based on at least one of a third time unit and a first time-frequency type; and
the third time unit is determined based on the first time unit and a preset offset value, and the first time-frequency type comprises either of the following: a time-frequency type of the third time unit, and a time-frequency type indicated by the network-side device.

2. The method according to claim 1, wherein that the second time unit is determined based on at least one of a third time unit and a first time-frequency type comprises:
the second time unit is determined based on a transmission occasion of at least one first reference signal that is before the third time unit.

3. The method according to claim 2, wherein the at least one first reference signal is: one first reference signal; wherein
the one first reference signal comprises any one of the following:
a reference signal closest to the third time unit;
a reference signal closest to the third time unit and having a same time-frequency type as the third time unit; and
a reference signal closest to the third time unit and having a same time-frequency type as indicated by the network-side device.

4. The method according to claim 2, wherein the at least one first reference signal is: at least two first reference signals; wherein
the at least two first reference signals satisfy any one of the following:
corresponding time-frequency types are the same as a time-frequency type of a target reference signal, wherein the target reference signal is: a reference signal closest to the third time unit among the at least two first reference signals;
corresponding time-frequency types are the same as the time-frequency type of the third time unit; and
corresponding time-frequency types are the same as the time-frequency type indicated by the network-side device.

5. The method according to claim 2, wherein the first reference signal is: a reference signal corresponding to a reference signal resource comprised in the CSI reporting configuration.

6. The method according to claim 5, wherein
the reference signal resource comprises any one of the following:
a reference signal resource corresponding to a time-frequency type of the second time unit;
a reference signal resource set corresponding to the time-frequency type of the second time unit;
a reference signal resource corresponding to the time-frequency type of the third time unit;
a reference signal resource set corresponding to the time-frequency type of the third time unit;
a reference signal resource corresponding to the time-frequency type indicated by the network-side device; and
a reference signal resource set corresponding to the time-frequency type indicated by the network-side device.

7. The method according to claim 2, wherein the first reference signal is any one of the following: a CSI reference signal CSI-RS, a CSI interference measurement CSI-IM, and a channel sounding reference signal SRS.

8. The method according to any one of claims 1 to 7, wherein the CSI reporting configuration comprises: at least one reference signal resource or at least one reference signal resource set.

9. The method according to claim 8, wherein the at least one reference signal resource comprises at least one of the following: a CSI-RS resource, a CSI-IM resource, and an SRS resource.

10. The method according to claim 8, wherein the at least one reference signal resource set comprises at least one of the following: a CSI-RS resource set, a CSI-IM resource set, and an SRS resource set.

11. The method according to claim 8, wherein each reference signal resource in the at least one reference signal resource corresponds to at least one time-frequency type.

12. The method according to claim 8, wherein each reference signal resource set in the at least one reference signal resource set corresponds to at least one time-frequency type.

13. The method according to any one of claims 1 to 7, wherein the third time unit is a time domain location of a first CSI reference resource.

14. A CSI report transmission method, wherein the method comprises:
sending, by a network-side device, a CSI reporting configuration to a terminal, wherein the CSI reporting configuration is used to instruct the terminal to send a first CSI report in a first time unit; and
receiving, by the network-side device, the first CSI report in the first time unit; wherein
the first CSI report comprises CSI measured by the terminal in a second time unit, and the second time unit is determined by the terminal based on at least one of a third time unit and a first time-frequency type; and
the third time unit is determined by the terminal based on the first time unit and a preset offset value, and the first time-frequency type comprises either of the following: a time-frequency type of the third time unit, and a time-frequency type indicated by the network-side device.

15. The method according to claim 14, wherein that the second time unit is determined by the terminal based on at least one of a third time unit and a first time-frequency type comprises:
the second time unit is determined by the terminal based on a transmission occasion of at least one first reference signal that is before the third time unit.

16. The method according to claim 15, wherein the at least one first reference signal is: one first reference signal; wherein
the one first reference signal comprises any one of the following:
a reference signal closest to the third time unit;
a reference signal closest to the third time unit and having a same time-frequency type as the third time unit; and
a reference signal closest to the third time unit and having a same time-frequency type as indicated by the network-side device.

17. The method according to claim 15, wherein the at least one first reference signal is: at least two first reference signals; wherein
the at least two first reference signals satisfy any one of the following:
corresponding time-frequency types are the same as a time-frequency type of a target reference signal, wherein the target reference signal is: a reference signal closest to the third time unit among the at least two first reference signals;
corresponding time-frequency types are the same as the time-frequency type of the third time unit; and
corresponding time-frequency types are the same as the time-frequency type indicated by the network-side device.

18. The method according to claim 15, wherein the first reference signal is: a reference signal corresponding to a reference signal resource comprised in the CSI reporting configuration.

19. The method according to claim 18, wherein
the reference signal resource comprises any one of the following:
a reference signal resource corresponding to a time-frequency type of the second time unit;
a reference signal resource set corresponding to the time-frequency type of the second time unit;
a reference signal resource corresponding to the time-frequency type of the third time unit;
a reference signal resource set corresponding to the time-frequency type of the third time unit;
a reference signal resource corresponding to the time-frequency type indicated by the network-side device; and
a reference signal resource set corresponding to the time-frequency type indicated by the network-side device.

20. The method according to claim 15, wherein the first reference signal is any one of the following: a CSI-RS, a CSI-IM, and an SRS.

21. The method according to any one of claims 14 to 20, wherein the CSI reporting configuration comprises: at least one reference signal resource or at least one reference signal resource set;
the at least one reference signal resource comprises at least one of the following: a CSI-RS resource, a CSI-IM resource, and an SRS resource;
the at least one reference signal resource set comprises at least one of the following: a CSI-RS resource set, a CSI-IM resource set, and an SRS resource set;
each reference signal resource in the at least one reference signal resource corresponds to at least one time-frequency type; and
each reference signal resource set in the at least one reference signal resource set corresponds to at least one time-frequency type.

22. The method according to any one of claims 14 to 20, wherein the third time unit is a time domain location of a first CSI reference resource.

23. A CSI report transmission apparatus, wherein the apparatus comprises a receiving module and a sending module;
the receiving module is configured to receive a CSI reporting configuration from a network-side device; and
the sending module is configured to send, based on the CSI reporting configuration received by the receiving module, a first CSI report to the network-side device in a first time unit; wherein
the first CSI report comprises CSI measured in a second time unit, and the second time unit is determined based on at least one of a third time unit and a first time-frequency type; and
the third time unit is determined based on the first time unit and a preset offset value, and the first time-frequency type comprises either of the following: a time-frequency type of the third time unit, and a time-frequency type indicated by the network-side device.

24. A CSI report transmission apparatus, wherein the apparatus comprises a sending module and a receiving module;
the sending module is configured to send a CSI reporting configuration to a terminal, wherein the CSI reporting configuration is used to instruct the terminal to send a first CSI report in a first time unit; and
the receiving module is configured to receive the first CSI report in the first time unit; wherein
the first CSI report comprises CSI measured by the terminal in a second time unit, and the second time unit is determined by the terminal based on at least one of a third time unit and a first time-frequency type; and
the third time unit is determined by the terminal based on the first time unit and a preset offset value, and the first time-frequency type comprises either of the following: a time-frequency type of the third time unit, and a time-frequency type indicated by the apparatus.

25. A terminal, comprising a processor and a memory, wherein the memory stores a program or instructions capable of running on the processor, and when the program or instructions are executed by the processor, the steps of the CSI report transmission method according to any one of claims 1 to 13 are implemented.

26. A network-side device, comprising a processor and a memory, wherein the memory stores a program or instructions capable of running on the processor, and when the program or instructions are executed by the processor, the steps of the CSI report transmission method according to any one of claims 14 to 22 are implemented.

27. A readable storage medium, wherein the readable storage medium stores a program or instructions, and when the program or instructions are executed by a processor, the steps of the CSI report transmission method according to any one of claims 1 to 13 are implemented, or the steps of the CSI report transmission method according to any one of claims 14 to 22 are implemented.
